# EUROPEAN PATENT APPLICATION

(11) **EP 3 575 222 A1**
(43) Date of publication of application: **04.12.2019**
(21) Application number: 18382370.7
(22) Date of filing: 30.05.2018
(51) Int. Cl.: B64D 45/02, B32B 3/26, H02G 13/00

(54) **LIGHTNING PROTECTION FOR AIRCRAFTS AND METHOD FOR ITS MANUFACTURING**

(71) Applicant: Airbus SAS, 31700 Blagnac (FR)
(72) Inventor: GARCÍA MARTÍNEZ, Valentin, 28906 Getafe (Madrid) (ES); FLOURENS, Franck, 31060 Toulouse Cedex 9 (FR); MURILLO, Richard, 31060 Toulouse Cedex 9 (FR); PEREZ CABRERO, Pablo, 28906 GETAFE (Madrid) (ES)
(74) Representative: Herrero & Asociados, S.L.

(57) **Abstract**

Lightning protection for aircrafts comprising a foil (1) provided with holes (2), wherein the ratio between a first characteristic dimension (a) and a second characteristic dimension (b) of each hole (2) is comprised between 1 and 25; and when the holes (2) are in a staggered pattern, the ratio between the area of all the holes (2) and the total area of the foil (1) is comprised between 5% and 80%; the angle defined by two lines extending from the centre of one hole (2) to the centre of each of two adjacent holes (2) is comprised between 20° and 80°; when the holes (2) are aligned longitudinally and transversally in the foil the ratio between the area of all the holes (2) and the total area of the foil (1) is comprised between 20% and 80%.

It permits to protect the aircraft from lightning events and from external electromagnetic waves.

## Description

The present invention refers to a lightning protection for aircrafts, which is appropriate for its use in any non-metallic external structural part which needs to be protected against lightning strikes.

### Background of the invention

The aircrafts must be protected against lightning strikes for safety reasons, both for the metallic and non-metallic structural parts of the aircrafts.

A solution currently used for lightning protection of non-metallic parts is the use of expanded metallic foils (EMF), which is a metal foil with diamond-shape holes. These EMFs are heavy because of its manufacturing process and geometrical features.

Another technology for lightning protection of non-metallic parts is the use of metallic meshes (MM), which is not as efficient as desired as wires interwoven lead to high resistance.

US 2012/0003495 A1 discloses a part made of a composite formed from a thermosetting resin such as, for instance, an aircraft fuselage panel, including means of protection against the effects of lightning. This protection consists on a grid of preferably circular holes, in a regular distribution, with the idea that the isotropy of the material is advantageous.

Further studies show that the anisotropy can be better in terms of EMH depending on the requirements, with a higher range of percentage of perforation. So this invention, apart from increase the useful range of percentage of perforated area for isotropic patterns, includes also the staggered pattern of holes, these holes having different shapes additional to the circular one.
Therefore, one aim of the invention is to protect non-metallic external structures of aircrafts from lightning events and from external electromagnetic waves. This protection has to meet a series of requirements of direct lightning effect, indirect effects (maximum sheet resistance), and manufacturing (adhesion, tackling), and it shall meet all requirements whilst being as lighter as possible, as for any aeronautic application.

### Description of the invention

With the lightning protection according to the present invention it is possible to solve said drawbacks, providing other advantages that are described below.

The lightning protection for aircrafts according to the present invention comprises a foil provided with a plurality of holes, wherein:
- the ratio between a first characteristic dimension and a second characteristic dimension (b) of each hole is comprised between 1 and 25; and
- when the holes are in a staggered pattern, the ratio between the area of all the holes and the total area of the foil is comprised between 5% and 80%; the angle defined by two lines extending from the centre of one hole to the centre of each of two adjacent holes is comprised between 20° and 80°;
- when the holes are aligned longitudinally and transversally in the foil the ratio between the area of all the holes and the total area of the foil is comprised between 20% and 80%.

Furthermore, the first characteristic dimension of the holes is preferably comprised between 0.3 mm and 50 mm, and the thickness of the foil is preferably comprised between 1 µm and 100 µm.

If necessary, the lightning protection can also comprise an adhesion layer applied on the outer surface of the foil, such as a veil adhesion layer, or two adhesion layers, one per each side of the foil. This layer can be comprised of woven or non-woven fibers, in mineral, polymeric or carbon materials. Reinforcing this layer can be done by increasing the sum perimeter of the dots per surface unit.

According to two alternative embodiments, the holes are provided in the foil in a staggered pattern, or the holes are aligned longitudinally and transversally in the foil.

In the lightning protection for aircrafts according to the present invention, the holes have a rounded, such as circular or elliptical shape, or polygonal plan shape, such as a rectangular or square plan shape.

In this invention, the foil has a constant thickness and it is got by a processing method such a perforation, laser etching, etc. This is a fundamental difference with both the EMF (Expanded Metallic Foils) and MM (Metallic Meshes), as they do not have a constant thickness by definition (MM) or by manufacturing method (EMF). Non constant thickness causes significant increases of resistance.

Furthermore, the foil of the lightning protection for aircrafts according to the present invention is a metallic foil.

The lightning protection for aircrafts according to the present invention provides at least the following advantages:
- Permits to protect the aircraft from lightning events and from external electromagnetic waves, meeting a series of requirements of direct lightning effect, indirect effects, such as maximum sheet resistance, and manufacturing, such as adhesion, tackling, etc.
- The lightning protection meets all requirements whilst being as light as possible, for any aeronautic application.
- The parameters regarding the dimensions, ratios between the areas of the holes and the foil and others are optimized to achieve the highest efficiency possible.
- The lightning protection meets the same or higher level of lightning protection (lightning direct effects and resistance requirements), adhesion, and tackling, using a lighter material than the prior art solutions.

### Brief description of the drawings

For a better understanding the above explanation and for the sole purpose of providing an example, some non-limiting drawings are included that schematically depict a practical embodiment.
Figures 1-5 are plan views showing the hole pattern in the foil of the lightning protection of the invention, according to five different embodiments;
Figure 6 is a section view of a lighting protection according to the present invention, showing an adhesion layer; and
Figure 7 is a plan view showing the angle defined by the hole pattern in the foil of the lightning protection of the invention, according to one embodiment.

### Description of a preferred embodiment

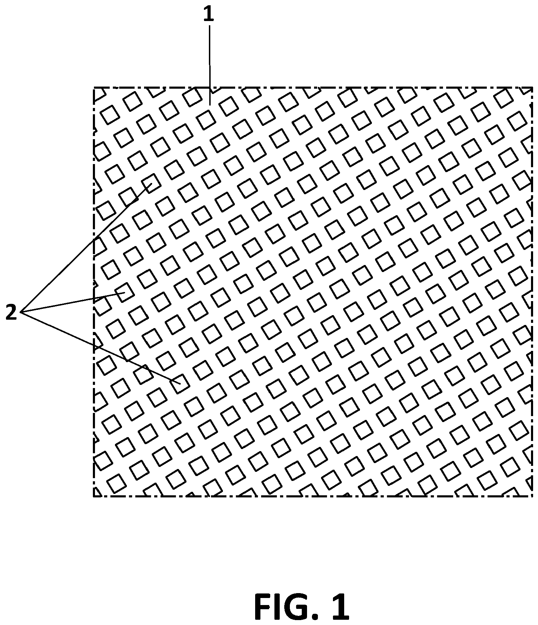

Even tough Figures 1-5 show five possible embodiments of the hole pattern of the lightning protection according to the present invention, it is clear that the hole pattern can be different, according to the parameters of claim 1 and that will be described hereinafter.

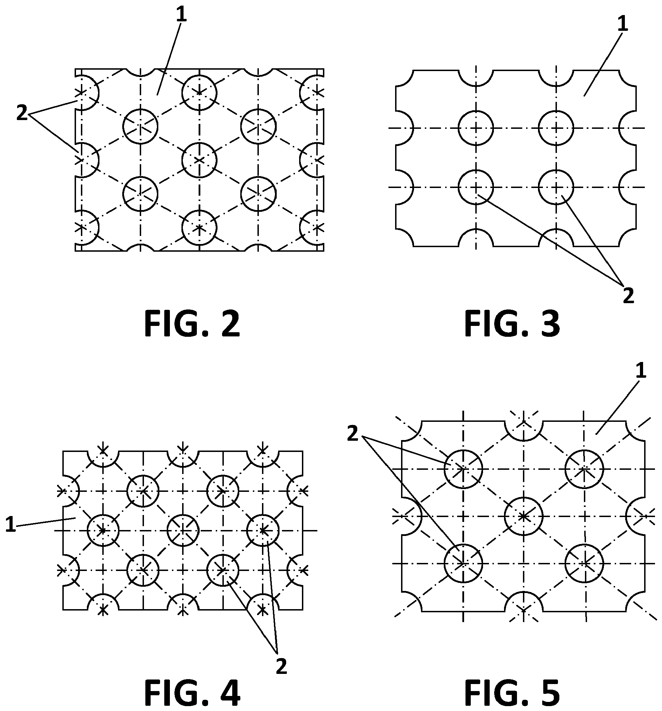

For example, in the first embodiment shown in Figure 1, the holes 2 have a square plan shape, and in the rest of embodiments shown in Figures 2-5, the holes 2 have a circular plan shape.

The lightning protection according to the present invention comprises a foil 1 provided with a plurality of holes 2. The foil 1 is metallic and the holes 2 are perforated in this foil 1 in any suitable way, such as laser cut, stamp, lithography, etc., but it is important to not damage the remaining surface of the foil 1.

In the lightning protection according to the present invention the ratio between the area of all the holes 2 and the total area of the foil 1 is comprised between 5% and 80%, for staggered distribution of the holes, and between 20% and 80% for regular distribution of holes. The ratio (a/b) between first and second characteristics (a) and (b) dimensions of each hole 2 is comprised between 1 and 25, and the angle (α) defined by two lines extending from the centre of one hole 2 to the centre of each of two adjacent holes 2 is comprised between 20° and 80°, in case of the staggered distribution of holes.

Furthermore, the lightning protection for aircrafts according to present invention can also have one or more of the following features:
- the first characteristic dimension (indicated as a in the drawings) of the hole 2 is comprised between 0.3 mm and 50 mm;
- the thickness of the foil 1 is comprised between 1 and 100 µm.

In general, the first characteristic dimension (a) of a hole 2 is defined as the maximum distance between two opposed points in the perimeter of the hole 2, and the second characteristic dimension (b) of a hole 2 is defined as the minimum distance between two opposed points in the perimeter of the hole 2. For example, the first characteristic dimension (a) of a hole 2 is defined as diameter in a circle, major axis in an ellipse, major diagonal in a diamond, etc and the second characteristic dimension (b) of a hole 2 is defined as diameter in a circle, minor axis in an ellipse, minor diagonal in a diamond, etc.

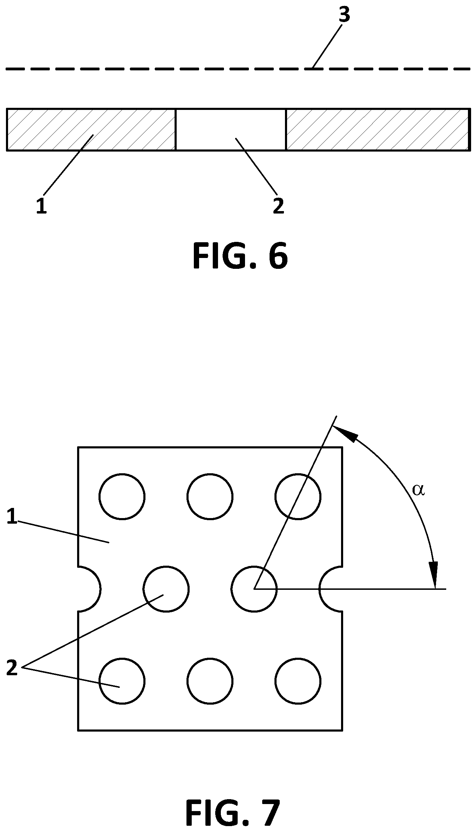

As shown in Figure 6, the lightning protection according to the present invention can comprise an adhesion layer 3 applied on one the external surface of the foil 1. This layer can be comprised of woven or non-woven fibers, in mineral, polymeric or carbon materials. The use of the adhesion layer 3, in combination with resin or the like, permits to enhance the anchoring of the perforated foil.

Therefore, taking into account this configuration, the lightning protection according to the present invention is able to sustain typical mechanical threat without peeling off the aircraft surface.

Even though reference has been made to a specific embodiment of the invention, it is obvious for a person skilled in the art that the lightning protection described herein is susceptible to numerous variations and modifications, and that all the details mentioned can be substituted for other technically equivalent ones without departing from the scope of protection defined by the attached claims.

## Claims

1. Lightning protection for aircrafts, comprising a foil (1) provided with a plurality of holes (2), **characterized in that**:
- the ratio between a first characteristic dimension (a) and a second characteristic dimension (b) of each hole (2) is comprised between 1 and 25; and
- when the holes (2) are in a staggered pattern, the ratio between the area of all the holes (2) and the total area of the foil (1) is comprised between 5% and 80%; the angle defined by two lines extending from the centre of one hole (2) to the centre of each of two adjacent holes (2) is comprised between 20° and 80°;
- when the holes (2) are aligned longitudinally and transversally in the foil the ratio between the area of all the holes (2) and the total area of the foil (1) is comprised between 20% and 80%.

2. Lightning protection for aircrafts according to claim 1, wherein the first characteristic dimension (a) of a hole (2) is defined as the maximum distance between two opposed points in the perimeter of the hole (2), and the second characteristic dimension (b) of a hole (2) is defined as the minimum distance between two opposed points in the perimeter of the hole (2).

3. Lightning protection for aircrafts according to claim 1, wherein the first characteristic dimension (a) of the holes (2) is comprised between 0.3 and 50 mm.

4. Lightning protection for aircrafts according to claim 1, wherein the thickness of the metallic foil (1) is constant.

5. Lightning protection for aircrafts according anyone of the previous claims, wherein the thickness of the foil (1) is comprised between 1 and 100 µm.

6. Lightning protection for aircrafts according to claim 1, wherein the lightning protection also comprises at least one adhesion layer (3) applied on one or each surface of the foil (1).

7. Lightning protection for aircrafts according to claim 6, wherein said adhesion layer (3) is comprised of woven or non-woven fibers.

8. Lightning protection for aircrafts according to claim 1, wherein the holes (2) are provided in the foil (1) in a staggered pattern.

9. Lightning protection for aircrafts according to claim 1, wherein the holes (2) are aligned longitudinally and transversally in the foil (1).

10. Lightning protection for aircrafts according to anyone of claims 1, 8 or 9, wherein the holes (2) have a rounded or polygonal plan shape.

11. Lightning protection for aircrafts according to claim 1, wherein the foil (1) is a metallic foil.
